# FASCICULE DE BREVET EUROPEEN

(11) **EP 3 298 286 B1**
(45) Date de publication et mention de la délivrance du brevet: **17.07.2019**
(21) Numéro de dépôt: 16719324.2
(22) Date de dépôt: 15.04.2016
(51) Int. Cl.: F16B 5/02

(54) **ELEMENT DE FIXATION AMELIORE**
VERBESSERTES BEFESTIGUNGSELEMENT
IMPROVED FASTENING ELEMENT

(30) Priorité: 21.05.2015 FR 1554572
(43) Date de publication de la demande: 28.03.2018
(73) Titulaire: PSA AUTOMOBILES S.A., 78300 Poissy (FR); Compagnie Plastic Omnium, 69007 Lyon (FR); Bollhoff Otalu S.A., 73490 La Ravoire (FR)
(72) Inventeur: TUAL, Catherine, 92190 Meudon (FR); NOULLEAU, Denis, 28130 Villiers Le Morhier (FR); LEJARS, Patrick, 73610 Saint Alban de Montbel (FR); FAGUER, Sylvain, 73800 Arbin (FR); NIERING, Laurent, 38280 Villette D'Anthon (FR)
(74) Mandataire: Fernandez, Francis Lionel
(86) Numéro de dépôt international: PCT/EP2016/058429
(87) Numéro de publication internationale: WO 2016/184620

(56) Documents cités:
- EP-A1- 2 676 869
- DE-U1-202010 002 447

## Description

L'invention concerne un système de fixation permettant de fixer des équipements sur un plancher comportant deux parois l'une au-dessus de l'autre et distantes l'une de l'autre, en particulier un plancher de véhicule dont les deux parois sont en matériau composite.

Les planchers de véhicule comportent généralement des parties avec des corps creux permettant de rigidifier ledit plancher. Ces corps creux sont formés de deux parois distantes l'une de l'autre, disposées l'une au-dessus de l'autre, et reliées entre elles par des cloisons. Des équipements, comme par exemple des sièges, peuvent être fixées au plancher sur la paroi de ces corps creux. Des systèmes de fixation de sièges permettant de répartir les efforts sur les deux parois des corps creux sur lesquels sont fixés les sièges sont connus. Par exemple, le brevet EP 2 676 869 décrit un système de fixation pour fixer un siège au niveau d'un corps creux d'un plancher de véhicule. Le système de fixation comporte un corps cylindrique de section circulaire dont l'une des extrémités comporte un épaulement de diamètre supérieur au diamètre du corps cylindrique, l'autre extrémité comportant un trou taraudé recevant une vis de fixation. Le corps creux comporte une paroi supérieure comportant un orifice permettant le passage de la vis, au-dessus d'une paroi inférieure comportant un orifice permettant le passage du corps cylindrique de la fixation. Le corps cylindrique est inséré dans l'orifice de la paroi inférieure, par l'extrémité comportant le trou taraudé, jusqu'à ce que l'épaulement vienne se bloquer contre la paroi inférieure, ledit orifice étant de diamètre inférieur à celui de l'épaulement. Une fois dans cette position l'autre extrémité du corps cylindrique est sensiblement disposée contre la paroi supérieure, le trou taraudé étant en vis-à-vis avec l'orifice de la paroi supérieure. Une vis de fixation de siège est vissée dans le trou taraudé en passant au travers de l'orifice de la paroi supérieure. Ainsi, les efforts transitant par la fixation du siège, et en particulier les efforts de traction, sont répartis entre les deux parois du plancher.

L'inconvénient de cette solution est que si la distance entre les deux parois n'est pas exactement la même que la longueur du corps cylindrique, un jeu va apparaître entre le système de fixation et l'une des parois, et la transmission des efforts sur les deux parois sera mal réalisée. Si la distance est trop courte, l'épaulement ne sera pas en contact avec la paroi inférieure. A l'inverse, si la distance est trop grande, l'extrémité du corps cylindrique ne sera pas en contact avec la paroi supérieure. En cas de serrage fort, le système de fixation va déformer les parois. Un autre inconvénient est, que si les orifices dans les parois supérieures et inférieures ne sont pas correctement alignés, l'insertion de la vis dans le trou taraudé peut ne plus être possible.

Le document DE 20 2010 002 447 U décrit un dispositif de compensation de tolérance avec une entretoise.

La présente invention a pour but de réaliser un élément de fixation permettant de fixer un équipement à une cloison, et plus particulièrement à une cloison formant un plancher de véhicule, comportant deux parois en vis-à-vis et distantes l'une de l'autre, répartissant les efforts sur chacune des deux parois, tout en acceptant les variations de l'espacement entre parois.

Ce but est atteint selon l'invention grâce à un élément de fixation destiné à fixer un équipement à une cloison comportant une première paroi et une deuxième paroi en vis-à-vis l'une de l'autre et distantes l'une au-dessus de l'autre, l'élément de fixation comprenant une première partie destinée à être fixée à la première paroi et comprenant une base destinée à être fixée à la première paroi, une entretoise fixée à la base à l'aide d'un moyen de réglage agencé de manière à permettre de modifier la position de l'entretoise par rapport à ladite base et comportant une surface d'appui, une deuxième partie destinée à être fixée à la deuxième paroi, de manière à être en regard de la première partie et comprenant une surface de réception en regard de la surface d'appui lorsque l'élément de fixation est fixé à la cloison, caractérisé en ce que le moyen de réglage et l'entretoise sont configurés pour permettre le déplacement de ladite entretoise de manière à mettre en appui la surface d'appui avec la surface de réception lorsque l'élément de fixation est installé sur la cloison, la première partie comporte un trou traversant qui la traverse de part en part de manière à ce que ledit trou traversant débouche d'un côté et de l'autre de la première paroi lorsque la première partie est fixée sur ladite première paroi, et la deuxième partie comporte un orifice de fixation situé en vis-à-vis du trou traversant, le trou traversant et l'orifice de fixation étant agencés de manière à ce qu'une tige de fixation puisse traverser la première partie au travers dudit trou traversant et se fixer dans l'orifice de fixation de la deuxième partie lorsque l'élément de fixation est fixé à la cloison.

Ainsi, grâce au moyen de réglage de l'entretoise, il est possible d'adapter la dimension de l'élément de fixation à l'espace situé entre les deux parois. Une fois l'élément de fixation installé sur la cloison, il suffit de dévisser l'entretoise jusqu'à ce qu'elle s'appuie contre la deuxième partie, la surface d'appui s'appuyant contre sur la surface de réception, pour obtenir un élément de fixation dont la dimension est adapté à l'espacement entre les deux parois, même si cet espacement varie d'une cloison à l'autre. Pour fixer un élément au plancher, une tige de fixation va traverser la première partie et s'insérer dans l'orifice de fixation de la deuxième partie. La cloison peut être un plancher, par exemple un plancher de véhicule.

Dans un mode de réalisation préféré de l'invention, l'orifice de fixation est un trou cylindrique de section circulaire comportant un taraudage de manière à permettre la fixation d'une tige de fixation filetée par vissage.

Ainsi, l'élément de fixation peut être utilisé avec une tige fileté, comme par exemple une vis. En choisissant un pas de vis et un diamètre adapté, une vis normalisée peut être utilisée pour fixer un équipement à la cloison à l'aide de l'élément de fixation.

Dans un autre mode de réalisation de l'invention, la base comporte un premier trou et l'entretoise comporte un deuxième trou, le premier trou et le deuxième trou étant dans le même alignement de manière à former le trou traversant, le deuxième trou débouchant sur la surface d'appui et l'orifice de fixation débouchant sur la surface de réception.

Ainsi avantageusement, l'élément de fixation est compact. De plus, les efforts générés par la tige de fixation lorsque celle-ci traverse la première partie et est fixée à la deuxième partie pour fixer un équipement au plancher, sont directement repris et transmis entre la première partie et la deuxième partie par les surfaces d'appui et de réception qui sont traversées par ladite la tige de fixation. Cette conception évite de créer un effet de bras de levier entre la tige de fixation et les surfaces de réception et d'appui.

Dans un autre mode de réalisation de l'invention, le premier trou et le deuxième trou sont cylindriques et de même axe, et l'orifice de fixation est cylindrique et d'axe parallèle à l'axe commun au premier trou et deuxième trou lorsque l'élément de fixation est fixé à la cloison.

Ainsi avantageusement, un déplacement de la première partie ou de la deuxième partie suivant une translation perpendiculaire à l'axe du premier trou ou de l'orifice de fixation, de manière à mettre en vis-à-vis le trou traversant, lui aussi cylindrique et de même axe que lesdits premier et deuxième trou car formé par le premier trou et le deuxième trou, avec l'orifice de fixation, permet de compenser un décalage de positionnement de l'une des parties de l'élément de fixation par rapport à l'autre et d'insérer une tige de fixation au travers du trou traversant de la première partie pour aller se fixer dans l'orifice de fixation. Ce décalage peut être dû par exemple une variation dans le positionnement d'une des parois par rapport à l'autre paroi.

Dans un autre mode de réalisation de l'invention, la surface d'appui et la surface de réception sont des surfaces tronconiques complémentaires.

Par exemple, la surface d'appui peut être une surface tronconique de révolution mâle et la surface de réception est une surface tronconique de révolution femelle complémentaire, ou la surface de réception est une surface tronconique de révolution mâle et la surface d'appui est une surface tronconique de révolution femelle complémentaire.

Ainsi avantageusement, lors de la mise en appui de la surface d'appui contre la surface de réception, le frottement des deux surfaces l'une contre l'autre va permettre le déplacement de la première et/ou de la deuxième partie de manière à ce que les deux surfaces de réception et d'appui s'insère l'une dans l'autre, grâce à leur forme tronconique complémentaire, lorsque les deux surfaces ne sont pas exactement l'une en face de l'autre. En agençant la fixation d'au moins la première ou la deuxième partie de manière à permettre le déplacement de ladite première ou deuxième partie par rapport à la paroi sur laquelle elle est fixé, on obtient un positionnement automatique correct de la première partie par rapport à la deuxième partie.

Dans un autre mode de réalisation de l'invention dans lequel le premier trou et le deuxième trou sont cylindriques et de même axe, et l'orifice de fixation est cylindrique et d'axe parallèle à l'axe commun au premier trou et deuxième trou lorsque l'élément de fixation est fixé à la cloison, les troncs de cônes formés par les surfaces de réception et les surfaces d'appui tronconiques comportent chacun une base circulaire de premier diamètre et une base circulaire de second diamètre, le premier diamètre étant plus petit que le second diamètre, et le trou traversant débouche sur la base de premier diamètre du tronc de cône formé par la surface tronconique de la surface d'appui et l'orifice de fixation débouche sur la base de premier diamètre du tronc de cône formé par la surface de réception, l'axe de la surface tronconique de la surface d'appui étant suivant l'axe du trou traversant et l'axe de la surface tronconique de la surface de réception étant suivant l'axe de l'orifice de fixation.

Ainsi avantageusement, le positionnement de la première partie par rapport à la deuxième partie par mise en appui de la surface d'appui contre la surface de réception permet d'aligner le trou traversant avec l'orifice de fixation.

Dans un autre mode de réalisation de l'invention, la base comporte un moyen de fixation à la première paroi agencé de manière à permettre un déplacement de ladite base au moins dans des directions parallèles à la surface de la partie de la première paroi sur laquelle ladite base est fixée, et/ou la deuxième partie comporte un moyen de fixation à la deuxième paroi agencé de manière à permettre un déplacement de ladite deuxième partie au moins dans des directions parallèles à la surface de la partie de la deuxième paroi sur laquelle ladite deuxième partie est fixée.

Ainsi avantageusement, la première partie et/ou la deuxième partie peut se déplacer par rapport à la paroi de manière à permettre de régler le positionnement de l'une des parties par rapport à l'autre partie alors que la première partie et la deuxième partie sont fixées chacune respectivement sur la première et la deuxième paroi. En particulier, ce repositionnement permet de mettre en vis-à-vis le trou traversant et l'orifice de fixation.

Pour réaliser et permettre ce déplacement, la première partie comporte une portion qui traverse la première paroi au travers d'un trou dont la dimension est plus grande que la section de ladite portion, de sorte qu'un jeu existe entre les bords dudit trou et ladite portion. La première partie est alors fixée à la première paroi par des moyens de fixation qui permettent de bloquer les mouvements de la première partie qui sont perpendiculaires à la surface de ladite première paroi tout en permettant des déplacement parallèlement à ladite paroi grâce au jeu entre les bords du trou réalisé dans la première paroi et la portion de la première partie qui traverse ladite première paroi.

Par exemple, la paroi peut être prise en sandwich entre un épaulement sur la première partie d'un côté et une rondelle de l'autre côté, la rondelle étant serrée contre ladite paroi par un écrou de manière à avoir peu de frottement entre la rondelle et ladite paroi, ainsi qu'entre l'épaulement et ladite paroi. Dans une autre variante, l'élément de fixation comporte une interface de fixation fixée de manière immobile par rapport à la première paroi, la première partie étant fixée à cette interface de fixation de manière à ne pas pouvoir se déplacer perpendiculairement à la paroi mais autorisant un mouvement de ladite première partie dans un plan parallèle à la partie de la paroi sur laquelle est fixée l'interface de fixation.

Les mêmes conceptions peuvent s'appliquer aussi sur la deuxième partie et sa fixation avec la deuxième paroi.

Dans un autre mode de réalisation de l'invention, le moyen de réglage de l'entretoise est formé par une partie filetée de l'entretoise coopérant avec une autre partie filetée de la base de manière à permettre le réglage de la position l'entretoise par vissage et dévissage de ladite entretoise par rapport à la base.

Ainsi avantageusement, le réglage peut être réalisé de manière précise, et l'effort d'appui facilement maîtrisable. De plus, la réalisation d'un tel moyen de réglage est facile.

Dans un autre mode de réalisation de l'invention, le premier trou est cylindrique à section circulaire avec une partie filetée, et l'entretoise comporte une extrémité cylindrique filetée se vissant dans ladite partie filetée du premier trou, ou le deuxième trou est cylindrique à section circulaire et comporte une partie fileté et la base comporte une partie cylindrique filetée, de manière à ce que l'entretoise se visse sur ladite partie cylindrique filetée de la base.

De préférence, le deuxième trou est cylindrique à section circulaire, coaxial avec l'extrémité cylindrique filetée de l'entretoise, de manière à être aligné avec le premier trou lorsque l'entretoise est vissée dans la base, ou le premier trou est cylindrique à section circulaire coaxial avec la partie de la base qui est cylindrique à section circulaire et qui comporte le filetage de manière à ce que le premier trou et le deuxième trou soient alignés lorsque l'entretoise est vissée sur la base.

De manière à permettre le vissage et le dévissage de l'entretoise par rapport à la base, l'entretoise peut comporter une interface de vissage agencé pour entrainer en rotation l'entretoise de manière à régler sa position par rapport à la base par vissage ou dévissage agencée de manière à ce qu'un outil comportant une forme coopérant avec ladite interface de vissage puisse accéder à ladite interface de vissage en passant par le premier trou. Ainsi avantageusement, la position de l'entretoise peut être réglée sans avoir accès à l'espace entre les deux parois sur lesquelles sont fixées la première et la deuxième partie.

Par exemple, l'interface de vissage peut être un creux en forme de prisme droit hexagonal disposé à l'extrémité de l'entretoise située dans le premier trou et s'étendant long d'une partie du deuxième trou depuis cette extrémité, et dont le diamètre d'un cercle circonscrit de l'hexagone de la section hexagonale du prisme est inférieur au plus petit diamètre du premier trou de sorte qu'une clé à 6 pans, connue sous le nom de clé Allen, puisse s'insérer dans l'interface de vissage et visser ou dévisser l'entretoise en passant par ledit premier trou. Ainsi, un outil existant et classique suffit pour régler la position de l'entretoise. Il n'est pas nécessaire de développer un outil spécifique.

La combinaison de l'élément de fixation ainsi décrit avec une tige de fixation traversant la première partie par le trou traversant et se fixant dans l'orifice de fixation de la deuxième partie, permet de créer un moyen de fixation d'un équipement à une cloison comportant deux parois distantes l'une de l'autre et en vis-à-vis.

L'élément de fixation suivant l'invention peut être utilisé sur un plancher de véhicule comportant au moins une partie formée par deux parois situées l'une au-dessus de l'autre et séparées par un espace.

De préférence, au moins l'une des parois du plancher de véhicule est en matériau composite. En autre variante, les deux parois du plancher sont en matériau composite.

L'invention porte aussi sur un véhicule comportant un élément de fixation suivant l'invention précédemment décrite.

La fabrication d'une cloison comportant un élément de fixation suivant l'invention peut suivre les étapes suivantes :
- une étape de réalisation de chacune des deux parois,
- une étape de fixation de la première partie et de la deuxième partie de l'élément de fixation respectivement sur la première paroi et sur la deuxième paroi,
- une étape de fixation de chacune des parois entre elles, la première paroi et deuxième paroi étant en vis-à-vis l'une de l'autre et espacées l'une de l'autre de manière à ce que la première partie et la deuxième partie se retrouvent sensiblement l'une en regard de l'autre,
- une étape de réglage de la position de l'entretoise de manière à mettre en appui la surface d'appui contre la surface de réception.

L'invention sera mieux comprise à la lecture de la description qui va suivre, donnée uniquement à titre d'exemple et faite en se référant aux dessins annexés, sur lesquels :
- La fig. 1 est une vue en coupe d'un éclaté de l'invention.
- La fig. 2 est une vue en coupe de l'invention dans laquelle l'entretoise est fixée à la base.
- La fig. 3 est une vue en coupe de l'invention fixé sur un plancher comportant deux parois, avant le réglage de l'entretoise.
- La fig. 4 est une vue en coupe de l'invention fixé sur un plancher comportant deux parois, après le réglage de l'entretoise.
- La fig. 5 est une vue en coupe de l'invention fixé sur un plancher de véhicule, dans une configuration où l'élément de fixation fixe un rail de siège à l'aide d'une vis.

Les dessins sont des représentations schématiques pour faciliter la compréhension de l'invention. Les composants ne sont pas forcément représentés à l'échelle. Les mêmes références correspondent aux mêmes composants d'une figure à l'autre.

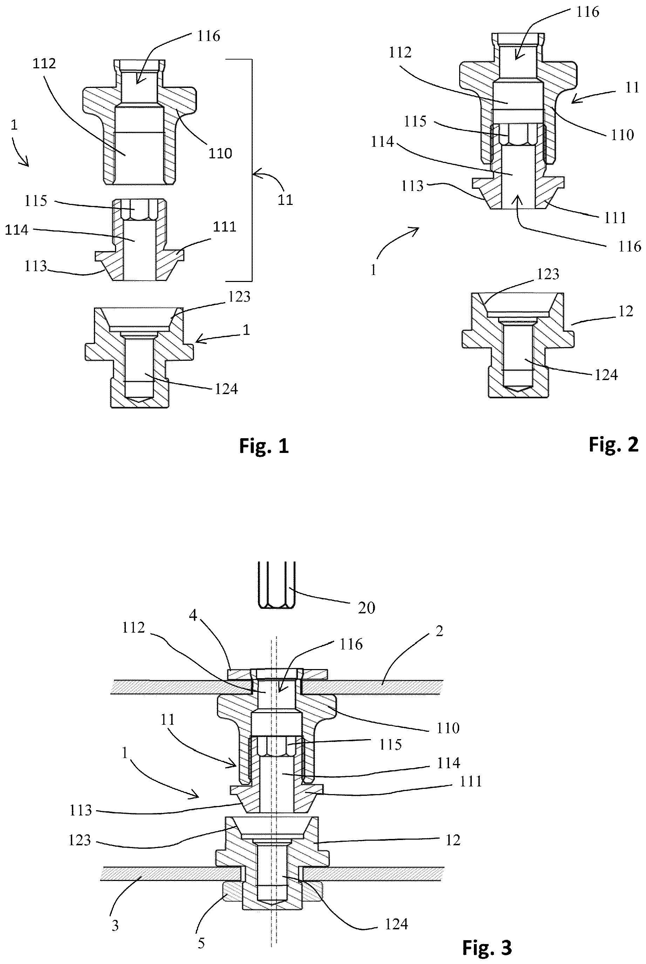

La fig. 1 montre un élément de fixation 1 suivant l'invention, comportant une première partie 11 et une deuxième partie 12. La première partie 11 comprend une base 110 et une entretoise 111.

Comme montré dans la figure 3, l'élément de fixation 1 est destiné à être fixé à un plancher comportant deux parois, une première paroi 2 et une deuxième paroi 3, l'une en face de l'autre et distante l'une de l'autre, c'est-à-dire que l'une des parois a une face en vis-à-vis avec une face de l'autre paroi. L'élément de fixation 1 s'étend entre les deux parois 2 et 3.

La première partie 11 est destinée à être fixée par l'une de ces extrémités à la première paroi 2, et la deuxième partie 12 est destinée à être fixée à la deuxième paroi 3, de manière à ce que la première partie 11 et la deuxième partie 12 soient sensiblement en regard l'une de l'autre.

Un trou traversant 116 traverse de part en part la première partie 11, de sorte que lorsque la première partie 11 est fixée à la première paroi 2, le trou traversant 116 débouche d'un côté et de l'autre de la dite première paroi 2.

La base 110 comporte un premier trou 112 et l'entretoise 111 comporte un deuxième trou 114. Le premier trou 112 et le deuxième trou 114 forment ensemble le trou traversant 116 lorsque l'entretoise 111 et la base 110 sont assemblées.

Le premier trou 112 traverse de part en part la base 110, de manière à déboucher de part et d'autre de la première paroi 2 lorsque l'élément de fixation 1 est fixé à ladite première paroi 2. Le premier trou 112 est cylindrique de section circulaire et comporte un taraudage sur une partie de sa longueur.

L'entretoise 111 comporte une partie cylindrique à section circulaire agencée pour s'insérer dans le premier trou 112. Cette partie cylindrique de l'entretoise 111 comporte une partie avec un filetage sur sa face extérieure de manière à coopérer avec la partie filetée située dans le trou 112. Ainsi, en faisant tourner l'entretoise 111, la position de ladite entretoise 111 par rapport à la base 110 peut être modifiée. La longueur de la première partie 11 suivant l'axe desdites parties cylindriques à section circulaire du premier trou 112 et de l'entretoise 111 peut ainsi être modifiée. L'entretoise 111 est vissée dans le trou 112 de préférence par l'extrémité du premier trou 112 située entre la première paroi 2 et la deuxième paroi 3 lorsque l'élément de fixation 1 est fixé sur la cloison.

La fig. 2 montre l'élément de fixation 1 dans une configuration dans laquelle l'entretoise 111 est vissée à la base 110. La coopération de la partie cylindrique filetée de l'entretoise 111 et de la partie taraudée du trou 114 de la base 110 crée ainsi un moyen de réglage de la position de l'entretoise 111 par rapport à la base 110.

Le trou traversant 116 est formé lors de l'assemblage de l'entretoise 111 sur la base 110. Une fois l'entretoise 111 vissée sur la base 110, le deuxième trou 114 et le premier trou 112 sont alignés l'un et l'autre de sorte à former le trou traversant 116.

La partie cylindrique de l'entretoise 111 s'insérant dans le premier trou 112 comporte une forme agencée pour créer une interface de vissage 115 afin de permettre de visser ou de dévisser l'entretoise 111 par rapport à la base 110 à l'aide d'un outil inséré à travers le premier trou 112 de la base 110. L'interface de vissage 115 est formée par les faces d'une forme de prisme droit à six pans en creux située à l'extrémité de l'entretoise 111 qui rentre dans le premier trou 112. Ladite forme de prisme crée un élargissement du deuxième trou 114 au niveau de ladite extrémité de l'entretoise 111. La forme hexagonale de la section dudit prisme est centrée sur l'axe du deuxième trou 114. Le premier trou 112 est d'un diamètre au moins légèrement plus grand au diamètre d'un cercle circonscrit de la section hexagonale du prisme, de sorte qu'un outil 20 de type clé Allen puisse coopérer avec l'interface de vissage 115 et permettre de visser ou dévisser l'entretoise 111 par rapport à la base 110, en insérant l'outil 20 dans le premier trou 112 depuis le côté de la première paroi 2 situé à l'opposé du côté de ladite paroi 2 où se situe l'entretoise 111, comme illustré en fig. 3. D'autres formes d'outil et d'empreinte coopérant avec l'outil peuvent être utilisées, comme par exemple une forme connue sous le nom commercial d'empreinte Torx, ou encore une forme à 4 pans. De préférence, on choisira des formes simples. D'autres formes pour créer une interface de vissage 115 peuvent être utilisées pour permettre le vissage ou le dévissage de l'entretoise 111.

L'entretoise 111 comporte une surface d'appui 113 sur son extrémité située à l'opposé de la partie cylindrique s'insérant dans le premier trou 112.

La deuxième partie 12 comporte une surface de réception 123 en regard de l'entretoise 111 et la face d'appui 113. La surface d'appui 113 et la surface de réception 123 sont de préférence de forme complémentaire. Dans le mode de réalisation présenté en fig. 1 et 2, les surfaces d'appui 113 et de réception 123 sont tronconiques. La surface d'appui 113 est une forme tronconique mâle et la surface de réception 123 est une surface tronconique femelle. Ainsi, en dévissant l'entretoise 111 par rapport à la base 110, il est possible de mettre en appui la surface d'appui 113 contre la surface de réception 123, la surface tronconique mâle de la surface d'appui 113 pouvant s'insérer dans le volume créé par la surface tronconique femelle de la surface de réception 123. En variante, la partie femelle peut être sur la surface d'appui 113 et la partie femelle sur la surface de réception 123.

En variante, d'autres formes de la base 110 et de l'entretoise 111 pourraient être réalisées pour former le moyen de réglage. Par exemple, le deuxième trou 114 peut être cylindrique à section circulaire avec une partie taraudée, et la base 110 peut comporter une partie cylindrique de section circulaire dont la surface est filetée et coopérant avec la partie taraudée du deuxième trou 112 de manière à ce que l'entretoise 111 vienne se visser sur ladite partie cylindrique filetée de la base 110. Dans cette variante, le premier trou 112 est de préférence cylindrique avec un axe confondu avec l'axe de ladite partie cylindrique filetée de la base 110.

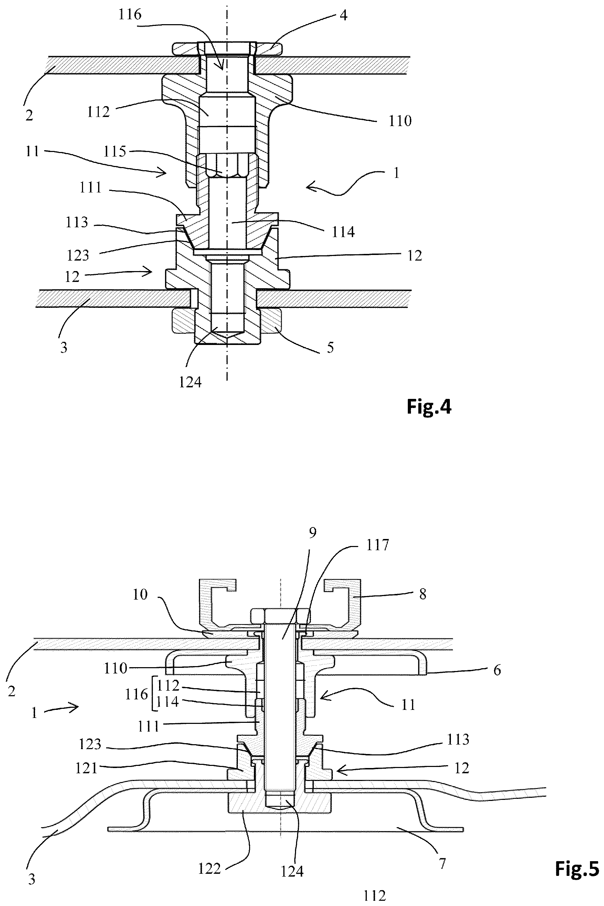

La deuxième partie 12 comporte un orifice de fixation 124. Cet orifice de fixation 124 est de préférence un trou cylindrique taraudé agencé pour y visser une vis. Lorsque la surface d'appui 113 est en appui contre la surface de réception 123, cet orifice de fixation 124 est dans l'alignement du trou traversant 116 qui est formé par le premier trou 112 et le deuxième trou 114, comme le montre la fig. 4. Ainsi, il est possible d'insérer une vis traversant la première partie 11 par le trou traversant 116 et venant se visser dans l'orifice de fixation 124 de la deuxième partie 12.

Dans la fig. 3, l'élément de fixation 1 est fixé à la première paroi 2 et la deuxième paroi 3. L'élément de fixation 1 est dans une configuration de réglage de l'entretoise 111 dans laquelle la surface d'appui 113 n'est pas contre la surface de réception 123, et dans laquelle l'axe du trou traversant 114 n'est pas aligné avec l'axe de l'orifice de fixation 124. Cet écart peut être lié par exemple à la dispersion lors du positionnement et de l'assemblage de la première paroi 2 et la deuxième paroi 3 entre elles de manière à former la cloison. Le premier trou 112 dans la base 110 et le deuxième trou 114 dans l'entretoise 111 sont cylindriques et de même axe longitudinal, et l'axe du tronc de cône défini par la surface d'appui 113 tronconique est dans le prolongement de l'axe du trou traversant 116. L'orifice de fixation 124 est un trou cylindrique en partie taraudé. L'axe du tronc de cône défini par la surface de réception 123 tronconique est dans le prolongement de l'axe de l'orifice de fixation 124.

La base 110 est fixée au premier plancher 2 à l'aide d'un premier moyen de fixation 4. Une partie de la base 110 passe au travers d'une ouverture réalisée dans le premier plancher 2.

La deuxième partie 12 est fixée au deuxième plancher 3 à l'aide d'un deuxième moyen de fixation 5. Une partie de la deuxième partie 12 passe au travers d'une ouverture réalisée dans la deuxième paroi 3. Ladite ouverture réalisée dans la deuxième paroi 3 est plus grande que la partie de la deuxième partie 12 qui passe au travers de ladite ouverture. Le moyen de fixation 5 et la deuxième partie 12 sont agencés de manière à permettre un déplacement de ladite deuxième partie 12 parallèlement au plan défini par la deuxième paroi 3 juste autour de l'ouverture réalisée dans ladite deuxième paroi 3.

Le réglage de la position de l'entretoise 111 met en appui la surface d'appui 113 tronconique mâle contre la surface de réception 123 tronconique et de forme complémentaire femelle. Si l'axe du trou traversant 116 n'est pas correctement aligné avec l'axe de l'orifice de fixation 124, la mise en appui de la surface d'appui 113 contre la surface de réception 123 permet un déplacement de la deuxième partie 12 sous l'action de la force résultant de l'appui de la surface d'appui 113 sur la surface de réception 123, jusqu'à ce que les axes des deux troncs coniques définis par les surfaces d'appui 113 et de réception 123 soient alignés, alignant ainsi l'orifice de fixation 124 avec le trou traversant 116, comme montré en fig. 4. Le réglage de l'entretoise 111 permet ainsi un alignement automatique de la première partie 11 et de la deuxième partie 12 de l'élément de fixation 1. Il permet aussi d'adapter la dimension de l'élément de fixation 1 à l'écartement entre la première paroi 2 et la deuxième paroi 3.

Le réglage de l'entretoise 111 permet ainsi d'adapter l'élément de fixation 1 à l'écartement entre la première paroi 2 et la deuxième paroi 3, et d'aligner les deux parties 11 et 12 de l'élément de fixation 1 de manière à ce qu'une tige droite de fixation puisse traverser la première partie 11 en passant dans le trou traversant 116 afin de se fixer dans l'orifice de fixation 124.

Cette capacité de l'élément de fixation 1 à aligner la première partie 11 et la deuxième partie 12 est particulièrement intéressante lorsque le procédé de fabrication de la cloison 3 ne permet pas d'assurer un centrage précis des trous de la première paroi 2 et de la deuxième paroi 3 destinés à recevoir l'élément de fixation 1. En effet, si lesdits trous ne sont pas précisément l'un en face de l'autre, le trou traversant de la première partie 116 et l'orifice de fixation 124 risquent de ne pas être correctement alignés. Par exemple, dans le cas d'une cloison dont les deux parois 2, 3 sont un matériau composite et sont collées l'une à l'autre à l'aide de cordons de colle pré-déposés sur l'une des parois 2 ou 3, le procédé de montage peut nécessiter d'assembler les deux parois 2, 3 en les rapprochant suivant une direction en biais par rapport à l'axe du trou traversant 116 lorsque l'élément de fixation est fixé sur la cloison. Ce rapprochement de biais des deux parois 2 et 3 peut être nécessaire par exemple afin d'éviter d'avoir un ripage de l'une des parois sur l'autre au niveau des cordons de colle qui étalerait la colle pendant le rapprochement desdites parois. Cette direction d'assemblage augmente le risque que d'avoir un écart dans l'alignement desdits trous. L'élément de fixation va ainsi permettre de compenser cet écart de l'alignement.

En variante, les surfaces de réception 123 et d'appui 113 peuvent être plates et parallèles, perpendiculaires au sens de déplacement de l'entretoise. Le réglage de la position de l'entretoise permet dans cette variante de compenser uniquement les jeux sur la distance entre la première paroi 2 et la deuxième paroi 3 qui peuvent apparaître lors de l'assemblage des deux parois 2 et 3 entre elles.

La fig. 5 montre une application d'un élément de fixation 1 suivant l'invention pour fixer un rail 8 de siège à un plancher de véhicule, ledit plancher étant formé par les deux parois 2 et 3 disposées l'une en regard de l'autre et distantes l'une de l'autre. La première partie 11 est fixée à la première paroi 2, tandis que la deuxième partie 12 est fixée à la deuxième paroi 3. Le système de fixation 1 s'étend entre les deux parois 2 et 3. L'entretoise 111 est réglée de manière à ce que la surface d'appui 113 soit en appui contre la surface de réception 123. Le premier trou 112 de la base 110, le deuxième trou 114 de l'entretoise 111, et l'orifice de fixation 124 sont alignés. Une vis 9 traverse la première partie 11 par ledit premier trou 112 de la base 110 et le deuxième trou 114 de l'entretoise 111, et se visse dans l'orifice de fixation 124. Le serrage de la vis dans l'orifice de fixation 124 permet de fixer un équipement, comme par exemple un rail 8 de siège, sans déformer la cloison.

On nomme face intérieure de la première paroi 2 la face de la première paroi 2 orientée vers la deuxième paroi 3, et l'autre face de la première paroi 2 opposée à la face intérieure face extérieur de la première paroi 2. De même, la face de la deuxième paroi 3 orientée vers la face intérieure de la première paroi 2 est nommée face intérieur de la deuxième paroi 3, et l'autre face de la deuxième paroi 3 opposée à la face intérieure de ladite paroi 3 est nommée face extérieure de la deuxième paroi 3.

La base 110 comporte une extrémité 117 passant au travers d'un trou réalisé dans la première paroi 2. Ladite base 110 comporte un épaulement s'appuyant contre la face intérieure de la première paroi 2. Une plaque de renfort 10 comportant un trou, par exemple qui peut être sous la forme d'une rondelle métallique, est disposée autour de l'extrémité 117, ladite extrémité 117 passant au travers dudit trou de la plaque de renfort 10. L'extrémité 117 est ensuite élargie, par exemple par écrasement à la manière d'un rivet, de manière à prendre en sandwich la plaque de renfort 10 et la première paroi 2, et ainsi fixer la base 110 à la première paroi 2. La plaque de renfort 10 permet de répartir les efforts sur une plus grande surface de la première paroi 2. Sur la face intérieure de la première paroi 2, une deuxième plaque de renfort 6, comportant un trou pour faire passer l'extrémité 117 de base 110, peut être placée entre l'épaulement de la base 110 et la première paroi 2, de manière à répartir les efforts sur ladite première paroi 2. Les bords des plaques de renfort 6 et 10 peuvent être chanfreinés ou arrondis en vis-à-vis de la première paroi 2, de manière à éviter de créer des angles vifs contre la face de ladite première paroi 2. En variante, les bords des plaques de renfort 6 et 10 peuvent présenter des bords tombés s'étendant en direction opposée à la première paroi 2, l'angle entre le bord tombé et la partie de la plaque s'appuyant contre la première paroi 2 étant arrondi. Cette conception permet de diminuer les risques que les bords desdites plaques 6 et 10 ne coupent la matière de la première paroi 2 par un phénomène d'emporte-pièce, lorsque les efforts de traction, ou en sens opposé à la traction, sont importants.

Dans le mode de réalisation de la fig. 5, la deuxième partie 12 comporte deux pièces, un corps de réception 121 et un corps de fixation 122. Le corps de fixation 122 comporte une partie cylindrique passant au travers d'un trou réalisé dans la deuxième paroi 3, et un épaulement s'appuyant contre la face extérieure de la deuxième paroi 3. Le corps de fixation 122 comporte l'orifice de fixation 124 dans la partie cylindrique.

Le corps de réception 121 a une forme générale de cylindre creux. Il comporte à une extrémité un fond percé d'une ouverture, qui est placé contre la face intérieure de la deuxième paroi 3. L'extrémité de la partie cylindrique du corps de fixation 122 passe au travers de l'ouverture disposée dans le fond du corps de réception 121. La fixation de la deuxième partie 12 à la deuxième paroi 3 est obtenue par élargissement de l'extrémité libre de la partie cylindrique du corps de fixation 122, par exemple par écrasement à la manière d'un rivet. L'autre extrémité du corps de réception, opposé à celle formant le fond, forme la surface de réception 123 tronconique femelle, complémentaire à la surface d'appui 113 tronconique mâle de la première partie 11. L'orifice de fixation 124 débouche de l'extrémité de la partie cylindrique du corps de fixation 122 qui passe au travers de l'ouverture disposée dans le fond du corps de réception 121.

En variante, le principe de fixation de la base 110 à la première paroi 2 peut être appliqué pour fixer la deuxième partie 12 à la deuxième paroi 3.

Afin de permettre un déplacement de la deuxième partie 12 par rapport à la deuxième paroi 3, dans un plan défini par la deuxième paroi 3 juste autour du lieu de fixation de ladite deuxième partie 12, le trou dans ladite deuxième paroi 3 est de dimension plus grande que le diamètre de la partie cylindrique du corps de fixation 122. Pour permettre le déplacement de la deuxième partie 12 par rapport à la deuxième paroi 3, l'écrasement de l'extrémité de la partie cylindrique du corps de fixation 122 est réalisé de manière à maintenir ledit corps de fixation 122 au corps de réception 121, tout en laissant la possibilité d'avoir un déplacement faible du corps de réception 121 par rapport au corps de fixation 122 suivant l'axe de la partie cylindrique dudit corps de fixation 122. L'association du serrage de la vis 9 et de la mise en appui de la surface d'appui 113 et de la surface de réception 123 permet en outre de compléter la fixation de la deuxième partie 12 à la deuxième paroi 3. En effet, le serrage de la vis 9 et la mise en appui de la surface de réception 123 contre la surface d'appui 113 permet de pincer la deuxième paroi entre le corps de fixation 122 et le corps de réception 121.

En variante, d'autres modes de fixation de la deuxième partie 12 à la deuxième paroi 3 et permettant un déplacement de ladite deuxième partie 12 par rapport à la deuxième paroi 3 peuvent être appliqués.

Pour fixer le rail 8 au plancher, la vis 9 traverse ledit rail 8, la base 110, l'entretoise 111, et se visse dans l'orifice de fixation 124 situé dans la deuxième partie 12.

Pour monter l'élément de fixation 1 sur la cloison, la première partie 11 et la deuxième partie 12 sont fixées chacune respectivement sur la première paroi 2 et la deuxième paroi 3 avant que ces deux parois 2 et 3 ne soient assemblées entre elles pour former le plancher. De préférence, l'entretoise 111 est vissée au maximum sur la base 110 avant d'assembler les deux parois 2 et 3 entre-elles. Une fois les deux parois 2 et 3 assemblées, l'entretoise 111 est dévissée jusqu'à ce que la surface d'appui 113 appuie contre la surface de réception 123. Le rail 8 est mis en position et la vis 9 est insérée dans le rail et l'élément de fixation, traverse la base 110 et l'entretoise 111, et est vissée dans l'orifice de fixation 124 de la deuxième partie 12. Ce procédé de fabrication du plancher est particulièrement adapté à un plancher de véhicule en matériau composite comportant deux parois collées l'une à l'autre et formant des corps creux au niveau desquelles des équipements, comme par exemple des sièges, sont fixés audit plancher.

En variante, l'élément de fixation 1 peut être fixé à la première paroi 2 et la deuxième paroi 3 après l'assemblage des deux parois à condition d'avoir un accès à l'espace situé entre les deux parois 2 et 3 suffisant. La première partie 11 est fixée à la première paroi 2 avec l'entretoise 111 entièrement vissée sur la base 110, puis la deuxième partie 12 est fixée sur la deuxième paroi 3. Ensuite, l'entretoise est dévissée jusqu'à mettre en appui la surface d'appui 113 contre la surface de réception 123.

Dans les figures 3 à 5, l'entretoise 111 est disposée entre les deux parois 2 et 3. En variante, l'entretoise 111 peut être disposée au moins en partie dans la base 110 et s'étendre d'un côté et de l'autre de la première paroi 2.

Cet élément de fixation 1 est particulièrement intéressant à utiliser sur un plancher de véhicule comportant deux parois 2 et 3 en matériau composite distantes et en regard l'une de l'autre. Le matériau composite peut être par exemple un matériau appelé SMC, acronyme de Sheet Moulding Compound, qui est un semi-produit thermodurcissable constitué de renforts de fibres coupées ou continues imprégnées par une résine, par exemple à base de polyester, vinylester ou epoxy, et comprenant un mélange de charges et d'adjuvants divers.

Les différentes parties composant l'élément de fixation 1 sont de préférence en matériau métallique, par exemple en acier. Une conception en d'autres matériaux, par exemple en matériau plastique ou composite est aussi envisageable.

## Revendications

1. Elément de fixation (1) destiné à fixer un équipement (8) à une cloison comportant une première paroi (2) et une deuxième paroi (3) en vis-à-vis l'une de l'autre et distantes l'une au-dessus de l'autre, l'élément de fixation (1) comprenant une première partie (11) destinée à être fixée à la première paroi (2) et comprenant une base (110) destinée à être fixée à la première paroi (2), une entretoise (111), fixée à la base (110) à l'aide d'un moyen de réglage agencé de manière à permettre de modifier la position de l'entretoise (111) par rapport à ladite base (110) et comportant une surface d'appui (113), la première partie (11) comportant un trou traversant (116) qui la traverse de part en part de manière à ce que ledit trou traversant (116) débouche d'un coté et de l'autre de la première paroi (2) lorsque la première partie (11) est fixée sur ladite première paroi (2), **caractérisé en ce que** l'élément de fixation comporte une deuxième partie (12) destinée à être fixée à la deuxième paroi (3), de manière à être en regard de la première partie (11) et comprenant une surface de réception (123) en regard de la surface d'appui (113) lorsque 'élément de fixation (1) est installé sur la cloison, et **en ce que** le moyen de réglage et l'entretoise (111) est configuré pour permettre le déplacement de ladite entretoise (111) de manière à mettre en appui la surface d'appui (113) avec la surface de réception (123) lorsque l'élément de fixation (1) est installé sur la cloison, et **en ce que** la deuxième partie (12) comporte un orifice de fixation (124) situé en vis-à-vis du trou traversant (116), le trou traversant (116) et l'orifice de fixation (124) étant agencés de manière à ce qu'une tige de fixation (9) puisse traverser la première partie (11) au travers dudit trou traversant (116) et se fixer dans l'orifice de fixation (124) de la deuxième partie (12) lorsque l'élément de fixation (1) est fixé à la cloison.

2. Elément de fixation (1) suivant la revendication 1 **caractérisé en ce que** l'orifice de fixation (124) est un trou cylindrique de section circulaire comportant un taraudage de manière à permettre la fixation d'une tige de fixation (9) filetée par vissage.

3. Elément de fixation (1) suivant l'une des revendications précédentes **caractérisée en ce que** la base (110) comporte un premier trou (112) et l'entretoise (111) comporte un deuxième trou (114), le premier trou (112) et le deuxième trou (114) étant dans le même alignement de manière à former le trou traversant (116), le deuxième trou (114) débouchant sur la surface d'appui (113) et l'orifice de fixation (124) débouchant sur la surface de réception (123).

4. Elément de fixation (1) suivant la revendication 3 **caractérisé en ce que** le premier trou (112) et le deuxième trou (114) sont cylindriques et de même axe, et l'orifice de fixation (124) est cylindrique et d'axe parallèle à l'axe commun au premier trou (112) et deuxième trou (114) lorsque l'élément de fixation (1) est fixé à la cloison.

5. Elément de fixation (1) suivant l'une des revendications précédentes **caractérisé en ce que** la surface d'appui (113) et la surface de réception (123) sont des surfaces tronconiques complémentaires.

6. Elément de fixation (1) suivant la revendication 4 en combinaison avec la revendication 5 **caractérisé en ce que** les troncs de cônes formés par les surfaces de réception (123) et les surfaces d'appui (113) tronconiques comportent chacun une base circulaire de premier diamètre et une base circulaire de second diamètre, le premier diamètre étant plus petit que le second diamètre, et le trou traversant (116) débouche sur la base de premier diamètre du tronc de cône formé par la surface tronconique de la surface d'appui (113) et l'orifice de fixation (124) débouche sur la base de premier diamètre du tronc de cône formé par la surface de réception (123), l'axe de la surface tronconique de la surface d'appui (113) étant suivant l'axe du trou traversant (116) et l'axe de la surface tronconique de la surface de réception (123) étant suivant l'axe de l'orifice de fixation (124).

7. Elément de fixation (1) suivant l'une des revendications précédentes **caractérisé en ce que** la base (110) comporte un moyen de fixation (4) à la première paroi (2) agencé de manière à permettre un déplacement de ladite base (110) au moins dans des directions parallèles à la surface de la partie de la première paroi (2) sur laquelle ladite base (110) est fixée, et/ou la deuxième partie (12) comporte un moyen de fixation (5) à la deuxième paroi (3) agencé de manière à permettre un déplacement de ladite deuxième partie (12) au moins dans des directions parallèles à la surface de la partie de la deuxième paroi (3) sur laquelle ladite deuxième partie (12) est fixée.

8. Elément de fixation (1) suivant l'une des revendications précédentes **caractérisé en ce que** le moyen de réglage de l'entretoise (111) est formé par une partie filetée de l'entretoise (111) coopérant avec une autre partie filetée de la base (110) de manière à permettre le réglage de la position l'entretoise (111) par vissage et dévissage de ladite entretoise (111) par rapport à la base (110).

9. Plancher de véhicule comportant au moins une partie formée par deux parois (2, 3) situées l'une au-dessus de l'autre et séparées par un espace, **caractérisé en ce qu'**il comporte au moins un élément de fixation (1) suivant l'une des revendication de 1 à 9.

10. Plancher de véhicule suivant la revendication 9 **caractérisé en ce qu'**au moins l'une des parois (2, 3) est en matériau composite.

11. Véhicule comportant un élément de fixation (1) suivant l'une des revendications 1 à 9.

## Patentansprüche

1. Befestigungselement (1), das dazu bestimmt ist, eine Ausrüstung (8) an einer Trennwand zu befestigen, die einer erste Wand (2) und eine zweite Wand (3) aufweist, die einander gegenüberliegen und übereinanderliegend beabstandet sind, wobei das Befestigungselement (1) einen ersten Teil (11) umfasst, der dazu bestimmt ist, an der ersten Wand (2) befestigt zu werden, und der eine Basis (110) umfasst, die dazu bestimmt ist, an der ersten Wand (2) befestigt zu werden, einen Abstandshalter (111), der an der Basis (110) mithilfe eines Einstellmittels befestigt ist, das so angeordnet ist, dass es eine Änderung der Position des Abstandshalters (111) in Bezug auf die Basis (110) ermöglicht, und der eine Auflagefläche (113) aufweist, wobei der erste Teil (11) ein Durchgangsloch (116) aufweist, das ihn vollständig durchsetzt, so dass das Durchgangsloch (116) auf jeder Seite der ersten Wand (2) mündet, wenn der erste Teil (11) auf der ersten Wand (2) befestigt ist, **dadurch gekennzeichnet, dass** das Befestigungselement einen zweiten Teil (12) aufweist, der dazu bestimmt ist, an der zweiten Wand (3) befestigt zu werden, so dass er dem ersten Teil (11) gegenüberliegt, und der eine Aufnahmefläche (123) gegenüber der Auflagefläche (113) umfasst, wenn das Befestigungselement (1) auf der Trennwand angebracht ist, und dadurch, dass das Einstellmittel des Abstandshalters (111) ausgestaltet ist, das Verschieben des Abstandshalters (111) zu ermöglichen, um die Auflagefläche (113) auf die Aufnahmefläche (123) zu drücken, wenn das Befestigungselement (1) auf der Trennwand angebracht ist, und dadurch, dass der zweite Teil (12) eine Befestigungsöffnung (124) aufweist, die sich gegenüber dem Durchgangsloch (116) befindet, wobei das Durchgangsloch (116) und die Befestigungsöffnung (124) angeordnet sind, so dass ein Befestigungsstift (9) den ersten Teil (11) durch das Durchgangsloch (116) durchsetzen und sich in der Befestigungsöffnung (124) des zweiten Teils (12) befestigen kann, wenn das Befestigungselement (1) an der Trennwand befestigt ist.

2. Befestigungselement (1) nach Anspruch 1, **dadurch gekennzeichnet, dass** die Befestigungsöffnung (124) ein zylindrisches Loch mit kreisförmigem Querschnitt ist, das ein Innengewinde aufweist, so dass es die Befestigung eines Gewindebefestigungsstifts (9) durch Festschrauben ermöglicht.

3. Befestigungselement (1) nach einem der vorstehenden Ansprüche, **dadurch gekennzeichnet, dass** die Basis (110) ein erstes Loch (112) aufweist und der Abstandshalter (111) ein zweites Loch (114) aufweist, wobei das erste Loch (112) und das zweite Loch (114) in der gleichen Ausrichtung liegen, so dass sie das Durchgangsloch (116) bilden, wobei das zweite Loch (114) in die Auflagefläche (113) mündet und die Befestigungsöffnung (124) in die Aufnahmefläche (123) mündet.

4. Befestigungselement (1) nach Anspruch 3, **dadurch gekennzeichnet, dass** das erste Loch (112) und das zweite Loch (114) zylindrisch sind und die gleiche Achse aufweisen, und die Befestigungsöffnung (124) zylindrisch ist und eine Achse parallel zur Achse aufweist, die dem ersten Loch (112) und zweiten Loch (114) gemein ist, wenn das Befestigungselement (1) an der Trennwand befestigt ist.

5. Befestigungselement (1) nach einem der vorstehenden Ansprüche, **dadurch gekennzeichnet, dass** die Auflagefläche (113) und die Aufnahmefläche (123) komplementäre kegelstumpfförmige Flächen sind.

6. Befestigungselement (1) nach Anspruch 4 in Kombination mit Anspruch 5, **dadurch gekennzeichnet, dass** die Kegelstümpfe, die von den kegelstumpfförmigen Aufnahmeflächen (123) und Auflageflächen (113) gebildet werden, jeweils eine kreisförmige Basis mit einem ersten Durchmesser und eine kreisförmige Basis mit einem zweiten Durchmesser aufweisen, wobei der erste Durchmesser kleiner ist als der zweite Durchmesser, und das Durchgangsloch (116) in die Basis mit erstem Durchmesser des Kegelstumpfes mündet, der von der kegelstumpfförmigen Fläche der Auflagefläche (113) gebildet wird, und die Befestigungsöffnung (124) in die Basis mit erstem Durchmesser des Kegelstumpfes mündet, der von der Aufnahmefläche (123) gebildet wird, wobei die Achse der kegelstumpfförmigen Fläche der Auflagefläche (113) gemäß dem Durchgangsloch (116) verläuft und die Achse der kegelstumpfförmigen Fläche der Aufnahmefläche (123) gemäß der Achse der Befestigungsöffnung (124) verläuft.

7. Befestigungselement (1) nach einem der vorstehenden Ansprüche, **dadurch gekennzeichnet, dass** die Basis (110) ein Mittel zur Befestigung (4) an der ersten Wand (2) aufweist, das so angeordnet ist, dass es eine Verschiebung der Basis (110) mindestens in Richtungen parallel zur Fläche jenes Teils der ersten Wand (2) ermöglicht, auf dem die Basis (110) befestigt ist, und/oder der zweite Teil (12) ein Mittel zur Befestigung (5) an der zweiten Wand (3) aufweist, das so angeordnet ist, dass es eine Verschiebung des zweiten Teils (12) mindestens in Richtungen parallel zur Fläche jenes Teils der zweiten Wand (3) ermöglicht, auf dem der zweite Teil (12) befestigt ist.

8. Befestigungselement (1) nach einem der vorstehenden Ansprüche, **dadurch gekennzeichnet, dass** das Einstellmittel des Abstandshalters (111) von einem Gewindeteil des Abstandshalters (111) gebildet wird, der mit einem anderen Gewindeteil der Basis (110) so zusammenwirkt, dass die Einstellung der Position des Abstandshalters (111) durch Festschrauben und Abschrauben des Abstandshalters (111) in Bezug auf die Basis (110) ermöglicht wird.

9. Fahrzeugboden, der mindestens einen Teil aufweist, der von zwei Wänden (2, 3) gebildet wird, die sich übereinander befinden und durch einen Raum getrennt sind, **dadurch gekennzeichnet, dass** er mindestens ein Befestigungselement (1) nach einem der Ansprüche 1 bis 9 aufweist.

10. Fahrzeugboden nach Anspruch 9, **dadurch gekennzeichnet, dass** mindestens eine der Wände (2, 3) aus Verbundmaterial besteht.

11. Fahrzeug, das ein Befestigungselement (1) nach einem der Ansprüche 1 bis 9 aufweist.

## Claims

1. Fastening element (1) intended for fastening a device (8) to a partition comprising a first wall (2) and a second wall (3) opposite one another and separated one above the other, the fastening element (1) comprising a first portion (11) intended for being fastened to the first wall (2) and comprising a base (110) intended for being fastened to the first wall (2), a spacer (111), fastened to the base (110) by means of an adjustment means arranged so as to allow the position of the spacer (111) to be modified relative to said base (110) and comprising a bearing surface (113), the first portion (11) comprising a through-hole (116) which passes through it entirely in such a way that said through-hole (116) opens on one side and the other of the first wall (2) when the first portion (11) is fastened onto said first wall (2), **characterised in that** the fastening element comprises a second portion (12) intended for being fastened to the second wall (3), in such a way as to be facing the first portion (11) and comprising a receiving surface (123) facing the bearing surface (113) when the fastening element (1) is installed on the partition, and **in that** the adjustment means and the spacer (111) is configured to allow for the displacement of said spacer (111) in such a way as to place the bearing surface (113) against the receiving surface (123) when the fastening element (1) is installed on the partition, and **in that** the second portion (12) comprises a fastening orifice (124) located opposite the through-hole (116), the through-hole (116) and the fastening orifice (124) being arranged in such a way that a fastening rod (9) can pass through the first portion (11) through said through-hole (116) and be fastened in the fastening orifice (124) of the second portion (12) when the fastening element (1) is fastened to the partition.

2. Fastening element (1) according to claim 1 **characterised in that** the fastening orifice (124) is a cylindrical hole of circular section comprising a tapping in such a way as to allow for the fastening of a fastening rod (9) threaded by screwing.

3. Fastening element (1) according to one of the preceding claims **characterised in that** the base (110) comprises a first hole (112) and the spacer (111) comprises a second hole (114), the first hole (112) and the second hole (114) being in the same alignment so as to form the through-hole (116), with the second hole (114) opening onto the bearing surface (113) and the fastening orifice (124) opening onto the receiving surface (123).

4. Fastening element (1) according to claim 3 **characterised in that** the first hole (112) and the second hole (114) are cylindrical and of the same axis, and the fastening orifice (124) is cylindrical and with an axis parallel to the axis common to the first hole (112) and second hole (114) when the fastening element (1) is fastened to the partition.

5. Fastening element (1) according to one of the preceding claims **characterised in that** the bearing surface (113) and the receiving surface (123) are complementary truncated surfaces.

6. Fastening element (1) according to claim 4 in combination with claim 5 **characterised in that** the truncated cones formed by the receiving surfaces (123) and the truncated bearing surfaces (113) each comprise a circular base of first diameter and a circular base of second diameter, with the first diameter being smaller than the second diameter, and the through-hole (116) opens onto the base of the first diameter of the truncated cone formed by the truncated surface of the bearing surface (113) and the fastening orifice (124) opens onto the base of the first diameter of the truncated cone formed by the receiving surface (123), with the axis of the truncated surface of the bearing surface (113) being along the axis of the through-hole (116) and the axis of the truncated surface of the receiving surface (123) being along the axis of the fastening orifice (124).

7. Fastening element (1) according to one of the preceding claims **characterised in that** the base (110) comprises a means of fastening (4) to the first wall (2) arranged so as to allow for a displacement of said base (110) at least in directions parallel to the surface of the portion of the first wall (2) whereon said base (110) is fastened, and/or the second portion (12) comprises a means of fastening (5) to the second wall (3) arranged so as to allow for a displacement of said second portion (12) at least in directions parallel to the surface of the portion of the second wall (3) whereon said second portion (12) is fastened.

8. Fastening element (1) according to one of the preceding claims **characterised in that** the adjustment means of the spacer (111) is formed by a threaded portion of the spacer (111) cooperating with another threaded portion of the base (110) in such a way as to allow for the adjusting of the position of the spacer (111) by screwing and unscrewing said spacer (111) in relation to the base (110).

9. Vehicle floorboard comprising at least one portion formed by two walls (2, 3) located one above the other and separated by a space, **characterised in that** it comprises at least one fastening element (1) according to one of claims 1 to 9.

10. Vehicle floorboard according to claim 9 **characterised in that** at least one of the walls (2, 3) is made of composite material.

11. Vehicle comprising a fastening element (1) according to one of claims 1 to 9.
